(19) Europäisches Patentamt
European Patent Office
Office européen des brevets

(11) **EP 4 672 033 A1**

(12) **EUROPEAN PATENT APPLICATION**
published in accordance with Art. 153(4) EPC

(43) Date of publication:
**31.12.2025 Bulletin 2026/01**

(21) Application number: **24760027.3**

(22) Date of filing: **26.01.2024**

(51) International Patent Classification (IPC):
***G06F 16/9035*** (2019.01)

(52) Cooperative Patent Classification (CPC):
**G06F 16/9035**

(86) International application number:
**PCT/JP2024/002362**

(87) International publication number:
**WO 2024/176720 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023 JP 2023026831**

(71) Applicant: **AISIN CORPORATION**
**Kariya-shi, Aichi 448-8650 (JP)**

(72) Inventors:
• **YOSHIMURA Shiko**
  **Kariya-shi, Aichi 448-8650 (JP)**
• **DICARLANTONIO Ron**
  **Toronto, Ontario, M4P 1G8 (CA)**
• **FARMANER Gary**
  **Toronto, Ontario, M4P 1G8 (CA)**

(74) Representative: **Kramer Barske Schmidtchen**
**Patentanwälte PartG mbB**
**European Patent Attorneys**
**Landsberger Strasse 300**
**80687 München (DE)**

(54) **RECOMMENDATION SYSTEM**

(57)    [Object] To provide a technique of recommending an item with unexpectedness for a user.

[Solution] A recommendation system is configured, including: a user data acquisition module that acquires, for each of a plurality of users, user data indicating an interest of a user; an item data acquisition module that acquires item data indicating a feature of each item; a multifaceted similarity calculation module that calculates a user-to-user similarity indicating a similarity between a target user and another user on a basis of the user data and calculates an item-to-item similarity indicating a similarity between items on a basis of the item data; an unexpectedness evaluation value calculation module that calculates an unexpectedness evaluation value indicating unexpectedness of each item for the target user on a basis of the user-to-user similarity and the item-to-item similarity; and a recommendation module that recommends, to the target user, an item selected on a basis of the unexpectedness evaluation value that has been calculated.

FIG. 1

## Description

TECHNICAL FIELD

The present disclosure relates to a recommendation system.

BACKGROUND ART

Conventionally, a method of acquiring an item to be recommended to a target user using a preference of another user having a preference similar to a preference of the target user is known (for example, Patent Literature 1).

CITATIONS LIST

PATENT LITERATURE

Patent Literature 1: JP 2009-252177 A

SUMMARY OF INVENTION

TECHNICAL PROBLEM

However, in the conventional case, an item known to the target user or a similar item tends to be recommended, and it is difficult for the target user to discover or notice a new item. Therefore, there is a problem in that the possibility that the target user makes some response to the recommended item decreases.

The present disclosure has been made in view of the above problem, and an object of the present disclosure is to provide a technique of recommending an item with unexpectedness for a user.

SOLUTIONS TO PROBLEM

In order to achieve the above object, a recommendation system includes: a user data acquisition module that acquires, for each of a plurality of users, user data indicating an interest of a user; an item data acquisition module that acquires item data indicating a feature of each item; a multifaceted similarity calculation module that calculates a user-to-user similarity indicating a similarity between a target user and another user on a basis of the user data and calculates an item-to-item similarity indicating a similarity between items on a basis of the item data; an unexpectedness evaluation value calculation module that calculates an unexpectedness evaluation value indicating unexpectedness of each item for the target user on a basis of the user-to-user similarity and the item-to-item similarity; and a recommendation module that recommends, to the target user, an item selected on a basis of the unexpectedness evaluation value that has been calculated.

That is, in the recommendation system, the evaluation value of each item for the target user is calculated on the basis of two types of similarities. Therefore, as compared with a case where the evaluation value of each item is calculated by one type of similarity, it is possible to select and recommend an item with unexpectedness for the target user on the basis of the evaluation value.

BRIEF DESCRIPTION OF DRAWINGS

Fig. 1 is a block diagram illustrating a configuration of a recommendation system.
Fig. 2A is a diagram for describing a configuration example of review data, Fig. 2B is a diagram for describing a configuration example of item data, and Fig. 2C is a diagram for describing a configuration example of user data.
Fig. 3A is a diagram illustrating an example of user-to-user similarity, and Fig. 3B is a diagram illustrating an example of item-to-item similarity according to user evaluation.
Figs. 4A and 4B are diagrams illustrating an example of an interest evaluation value.
Fig. 5 is a flowchart of recommendation processing.

DESCRIPTION OF EMBODIMENTS

Here, embodiments of the present disclosure will be described in the following order.

(1) Configuration of recommendation system:
(2) Recommendation processing:
(3) Other embodiments:

(1) Configuration of recommendation system:

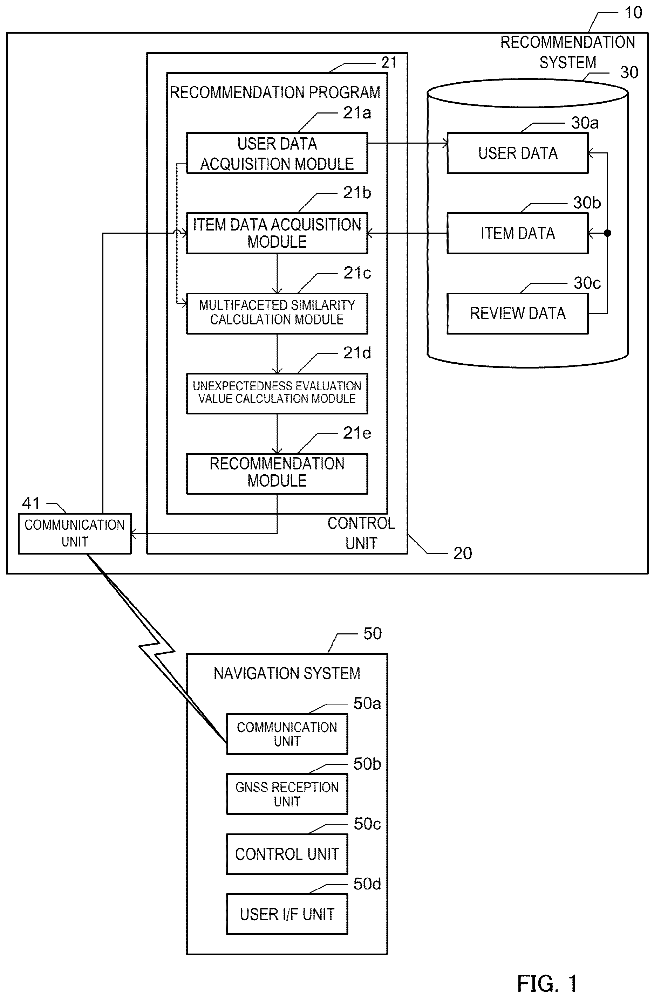

Fig. 1 is a block diagram illustrating a configuration of a recommendation system 10 according to the present disclosure. In the present embodiment, the recommendation system 10 includes a server computer, and recommends an item to a user of a navigation system 50 as a client. There may be a plurality of clients of the recommendation system 10, one of which is illustrated in Fig. 1. The item recommended in the present embodiment is a facility (point of interest (POI)) that can be set as a destination or the like of a navigation system. In the present embodiment, "facility" is a specific example of an item.

The recommendation system 10 includes a control unit 20 including a central processing unit (CPU), a random access memory (RAM), a read only memory (ROM), and the like, a recording medium 30, and a communication unit 41, and can execute a program stored in the recording medium 30 or the ROM by the control unit 20. In the present embodiment, a recommendation program 21 can be executed as this program. The communication unit 41 includes a circuit that communicates with the navigation system 50, and the control unit 20 can communicate with the navigation system 50 by processing of the recommendation program 21.

The navigation system 50 is a device having a navigation function of navigating to a destination. The navigation system 50 may be configured as an in-vehicle device, or may be configured as a portable terminal such as a tablet or a smartphone. The navigation system 50 includes a communication unit 50a, a global navigation satellite system (GNSS) reception unit 50b, a control unit 50c, and a user interface (I/F) unit 50d. The control unit 50c includes a CPU, a ROM, a RAM, and a recording medium, and the CPU can execute various programs including a navigation program recorded in the ROM or the recording medium.

The communication unit 50a includes a communication circuit for wirelessly communicating with other devices. The navigation system 50 can communicate with the recommendation system 10 through the communication unit 50a. The user I/F unit 50d is an interface unit with which the user inputs an instruction and various types of information are provided to the user. The user I/F unit 50d includes a touch panel display, a switch, a speaker, and the like (not illustrated). That is, the user I/F unit 50d includes an output unit of an image and a sound and an input unit of an instruction by the user.

The GNSS reception unit 50b is a device that receives a global navigation satellite system signal. The GNSS reception unit 50b receives radio waves from navigation satellites, and outputs a signal for calculating the position of the navigation system 50 via an interface (not illustrated). By executing the navigation program, the control unit 50c acquires this signal and acquires the position of the navigation system 50.

Furthermore, the control unit 50c acquires time from a clocking unit (not illustrated). When it is determined that the position of the navigation system 50 stays within a predetermined area for a predetermined time or longer on the basis of the position and the time, the control unit 50c estimates that the user of the navigation system 50 stays at the corresponding position. The control unit 50c specifies a facility existing at the corresponding position on the basis of the map information. Note that the map information may be recorded in the recording medium of the navigation system 50 or may be acquired from a navigation server (not illustrated). In any case, the map information includes at least facility data including a location or name of a facility that can be a POI, a facility ID, a telephone number, a facility genre, and the like. The control unit 50c transmits the facility ID of the facility in which the user is estimated to have stayed and the user ID to the recommendation system 10 in association with each other. Note that the user ID is information for identifying the user of the navigation system 50.

Furthermore, when the user inputs review data including a text comment and a rating for the facility visited by the user to the navigation system 50 by operating the user I/F unit 50d, the control unit 50c transmits the review data to the recommendation system 10 in association with the user ID and the facility ID. In the present embodiment, the review data includes a comment by text data and a rating value (for example, five-grade evaluation), the text data and the rating value indicating the evaluation of the facility by the user. Note that, of course, image data captured in the stay time zone of the facility may be included in the review data.

In the navigation system 50, when a predetermined condition for presenting a recommended facility is satisfied, the control unit 50c transmits a recommendation request to the recommendation system 10 together with the user ID. Note that, in the present embodiment, the recommendation request includes a target region, and the recommendation system 10 acquires a facility in the target region as a recommended facility and returns the facility to the navigation system 50. The control unit 50c displays the facility returned from the recommendation system 10 in response to the recommendation request on a display unit of the user I/F unit 50d. The predetermined condition described above may be that the user has performed a specific operation such as facility search for destination setting, or may be that a predetermined time has elapsed, that the user has moved a predetermined distance, or the like. The target region may be a region designated by the user, or may be a predetermined area including the current location.

The recommendation system 10 acquires the above-described various data transmitted from the navigation system 50 via the communication unit 41. In the recording medium 30 of the recommendation system 10, user data 30a, item data 30b, and review data 30c are recorded. The review data 30c is data indicating the user's impression of the facility and the like, and includes a rating value and a comment by text data, the rating value and the text data indicating the evaluation of the facility by the user, in association with the facility ID and the user ID of the user who has performed the review. Note that the review data may include image data. The individual review data 30c is transmitted from the navigation system 50 or other various information terminals to the recommendation system 10.

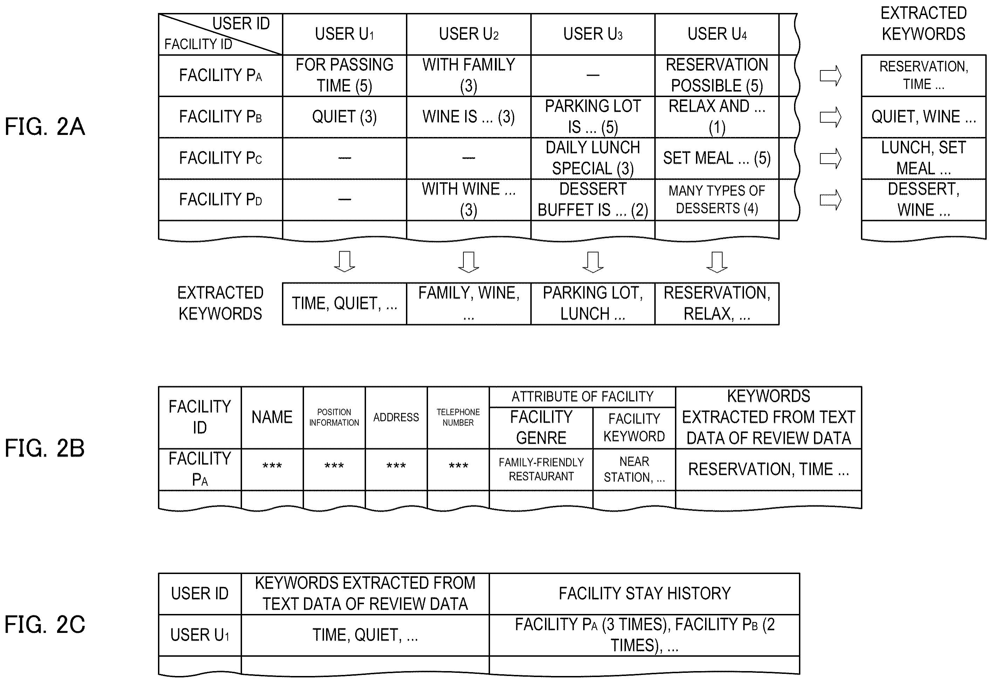

Fig. 2A is a diagram illustrating a configuration example of the review data 30c. Each piece of data of the review data 30c is associated with a user ID and a facility ID, and includes text data and a rating value. Each numerical value in parentheses in Fig. 2A indicates an example of a rating value given to a facility by the user. A vertical arrow in Fig. 2A indicates that a keyword or a phrase extracted from text data included in the review data 30c is recorded in user data 30a described later in association with a user ID. A horizontal arrow in Fig. 2 indicates that a keyword or a phrase extracted from the text data of the review data 30c is recorded in the item data 30b to be described later in association with a facility ID.

The item data 30b is data in which each item, that is, the facility ID of each facility in the case of the present embodiment, is associated with various pieces of information regarding the facility. Fig. 2B illustrates a configuration example of the item data 30b. More specifically, in the item data, information indicating a name, location information, an address, a telephone number, and an attribute of the facility is included in advance in association with the facility ID. The information indicating the attribute includes a facility genre, a facility keyword, and the like. The facility genre indicates a genre to which the facility belongs under the genre classification. The facility genre may have a hierarchical structure. The facility keyword is a word or phrase indicating a feature of the facility, and for example, a facility keyword designated in advance by an operator of the facility or an operator of the recommendation system is registered in the item data 30b. Furthermore, in the item data 30b, keywords and phrases based on user evaluation extracted from the review data 30c accumulated in the operation process of the system are recorded in association with the item data 30b.

The user data 30a is data in which various types of information regarding the user are associated with the user ID, and in particular, in the present embodiment, information indicating a tendency of interest of the user is associated with the user ID. Fig. 2C illustrates a configuration example of the user data 30a. Specifically, in the user data, a keyword or a phrase extracted from the review data indicating the evaluation of the facility performed by the user is recorded in association with each user ID. Furthermore, the user data 30a includes a facility stay history of a user for each user ID. Specifically, for example, the user data 30a includes the facility ID of the facility in which the user has actually stayed with the number of stays.

The recommendation program 21 includes a user data acquisition module 21a, an item data acquisition module 21b, a multifaceted similarity calculation module 21c, an unexpectedness evaluation value calculation module 21d, and a recommendation module 21e in order to implement a function of recommending a facility that is unexpected for the user of the navigation system 50.

By the function of the user data acquisition module 21a, the control unit 20 acquires the user data indicating the interest of the user for each of the plurality of users. In the present embodiment, the control unit 20 analyzes the review data 30c transmitted by the user (that is, the review data associated with the user ID of the user) for each user, acquires a keyword, and records the keyword in association with the user data 30a (see, for example, vertical arrows in Fig. 2A, and Fig. 2C). When the review data 30c includes a word specified by the user as a keyword, the control unit 20 acquires the word as a keyword. Furthermore, in a case where any one of words determined in advance as a word indicating the feature of the facility or the evaluation of the facility is included in the text data of the review, the control unit 20 acquires the word as a keyword. Regarding the keywords, keywords having similar meanings are classified together in advance (for example, reasonable price, low price, cheap, and the like) even if the expressions are different, and the keywords are acquired for each classification. In the present embodiment, the control unit 20 acquires an interest vector indicating the interest of a user for each user on the basis of the keyword extracted from the review data as described above, the facility genre of the facility in which the user has stayed, and the like. The component of the interest vector corresponds to a plurality of items for defining the interest of the user, and a value indicating the presence or absence of the interest of the user in the corresponding item is set to each component (in a case where the component is present, a value indicating the degree may be set).

By the function of the item data acquisition module 21b, the control unit 20 acquires item data indicating a feature of each item. In the present embodiment, the feature of the item is acquired by evaluation (review data) of each item by a random user. Specifically, as described above, the control unit 20 analyzes the review data 30c, extracts a keyword, and records the keyword in association with the item data 30b (see, for example, horizontal arrows in Fig. 2A, and Fig. 2B). In the present embodiment, the control unit 20 acquires the feature vector indicating the feature of a facility for each facility on the basis of the keyword extracted from the review data as described above. The component of the feature vector corresponds to a plurality of items for defining the feature of the facility, and a value indicating whether or not the facility corresponds to the corresponding item is set to each component (if applicable, a value indicating the degree may be set).

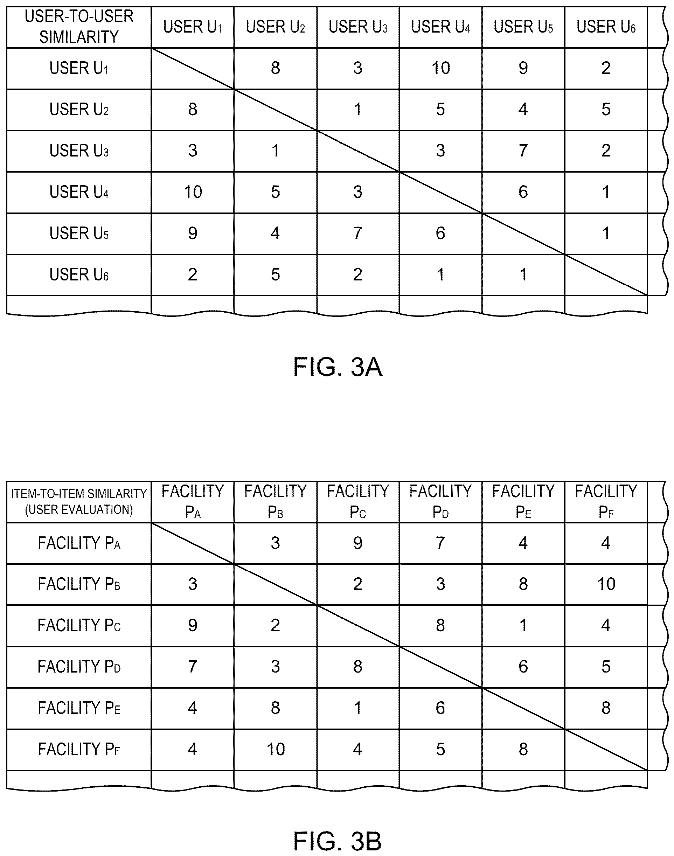

By the function of the multifaceted similarity calculation module 21c, the control unit 20 calculates user-to-user similarities indicating the similarities between all users in a brute-force manner on the basis of the user data 30a, and acquires a user-to-user similarity indicating the similarity between a target user and another user. In the present embodiment, the target user is a user of the navigation system 50 who has transmitted the recommendation request (that is, the user who will receive a recommendation). The control unit 20 calculates similarities between all the users including similarities between the target user and other users in a brute-force manner. The similarity is a value calculated on the basis of the distance between the respective interest vectors of two users to be compared, and the control unit 20 regards that the smaller the distance, the higher the similarity. Fig. 3A is a diagram illustrating an example of user-to-user similarity. In the present embodiment, the user-to-user similarity is expressed in a range of, for example, more than 0 and 10 or less, and 10 indicates that the similarity is the highest.

Furthermore, by the function of the multifaceted similarity calculation module 21c, the control unit 20 calculates item-to-item similarities indicating the similarities between items on the basis of the item data 30b. In the present embodiment, the control unit 20 calculates an item-to-item similarity on the basis of the evaluation of each item by a random user included in the item data 30b. The control unit 20 calculates similarities between all facilities in a brute-force manner. The similarity is a value calculated on the basis of the distance between the respective feature vectors of two facilities to be compared, and the control unit 20 regards that the smaller the distance, the higher the similarity. Fig. 3B is a diagram illustrating an example of item-to-item similarity. In the present embodiment, the item-to-item similarity is expressed in a range of, for example, more than 0 and 10 or less, and 10 indicates that the similarity is the highest.

By the function of the unexpectedness evaluation value calculation module 21d, the control unit 20 calculates an unexpectedness evaluation value indicating the unexpectedness of each item for the target user on the basis of the user-to-user similarity and the item-to-item similarity. In the present embodiment, the control unit 20 calculates an interest evaluation value $V_1$ indicating the level of interest of the target user in each item on the basis of the user-to-user similarity, and calculates the unexpectedness evaluation value on the basis of the interest evaluation value and the item-to-item similarity.

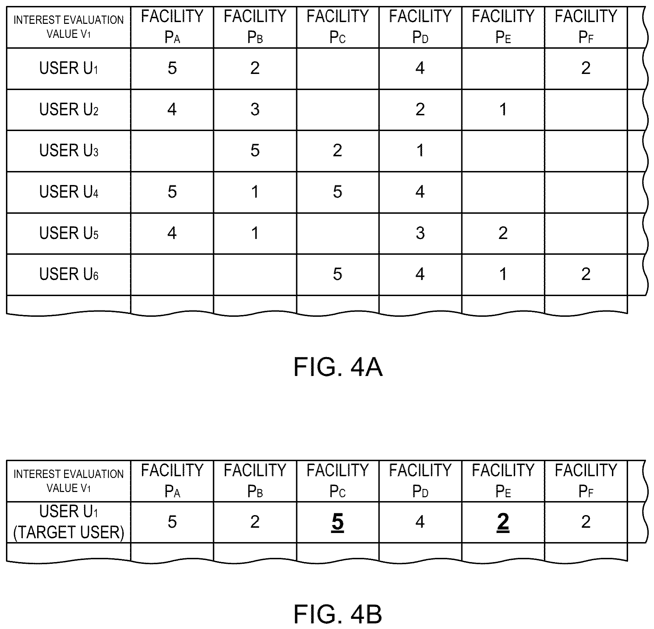

In the present embodiment, the control unit 20 sets the interest evaluation value $V_1$ of each facility for the target user on the basis of the rating value given to the facility by the target user, the number of visits to the facility by the user, and the like. The value is set within a range of, for example, more than 0 and 5 or less such that the interest evaluation value $V_1$ becomes higher for the facility to which the higher rating value is given or the facility to which the number of visits is larger. Fig. 4A illustrates an example of the interest evaluation value $V_1$ set for each user. Blank indicates a facility in which the user has taken no action (never visited, not rated, etc.).

The control unit 20 diverts the evaluation value $V_1$ of another user having a high user-to-user similarity as the evaluation value $V_1$ of a blank facility (facility in which the user has taken no action). By diverting the evaluation value of another similar user, it is possible to set the evaluation value estimated for the target user for the facility for which the evaluation value is not recorded for the target user.

Specifically, for example, in Fig. 4A, since a user $U_1$ does not have the interest evaluation value $V_1$ of a facility $P_C$, the control unit 20 selects another user having the highest user-to-user similarity with the user $U_1$ among the other users having the evaluation value of the facility $P_C$, and sets the evaluation value of the facility $P_C$ of the selected other user as the evaluation value of the facility $P_C$ of the target user $U_1$. More specifically, for example, with reference to Figs. 4A and 3A, the description will be continued on the assumption that another user having the evaluation value of the facility $P_C$ (see Fig. 4A) and having the highest similarity with the target user $U_1$ is specified to be a user $U_4$ (see Fig. 3A). In this case, the control unit 20 diverts "5", which is the evaluation value of the facility $P_C$ of the user $U_4$, as the evaluation value of the facility $P_C$ of the target user $U_1$ with reference to Fig. 4A (see Fig. 4B). In addition, in the example of Fig. 4A, since the user $U_1$ does not have the interest evaluation value $V_1$ of a facility $P_E$, either, processing of diverting the interest evaluation value $V_1$ of another similar user is similarly performed for the facility $P_E$. That is, when specifying that another user having the evaluation value of the facility $P_E$ and having the highest similarity with the target user $U_1$ is a user $U_5$, the control unit 20 sets "2", which is the evaluation value of the facility $P_E$ of the user $U_5$, as the evaluation value of the facility $P_E$ of the target user $U_1$ (see Fig. 4B). Similarly, the control unit 20 sets evaluation values of facilities (blank facilities in Fig. 4A) having no evaluation value for each user, thereby setting the interest evaluation values $V_1$ of all items for all the users. The interest evaluation value $V_1$ tends to have a large value for a facility that is known or not novel for each user but is estimated to be drawing strong interest.

After calculating the interest evaluation value $V_1$ for each user in this manner, the control unit 20 calculates an unexpectedness evaluation value $V_2$ by updating the interest evaluation value $V_1$ of the target item (that is, the target facility in the present embodiment) such that the interest evaluation value $V_1$ decreases as the item-to-item similarity between the target item and another item increases.

Specifically, the control unit 20 calculates the unexpectedness evaluation value $V_2$ for each facility using the following Equation (1).

$$V_2 = V_1 \times K_1 - S \times K_2 \quad \ldots (1)$$

Here, $K_1$ is a weighting factor of the interest evaluation value $V_1$, and $K_2$ is a weighting factor of item-to-item similarity $S$. Here, $0 < K_1 < 1$, $0 < K_2 < 1$, and $K_2 = 1 - K_1$ are satisfied. In the present embodiment, for example, $K_1 = 0.8$ and $K_2 = 0.2$ are adopted. $V_1$ is an interest evaluation value of the target facility for the target user, and $S$ is an item-to-item similarity between the target facility and another facility. As illustrated in Fig. 3B, the item-to-item similarities are calculated for all combinations of certain two facilities.

For example, in the example of Fig. 3B, the item-to-item similarities between the facility $P_C$ and facilities $P_A$, $P_B$, $P_D$, $P_E$, and $P_F$ are 9, 2, 8, 1, and 4, respectively. Among these, the value to be used as $S$ in Equation (1) is determined by various methods. For example, the maximum value of the item-to-item similarities between the target facility and other facilities may be adopted as $S$. In the example of Fig. 3B, since the maximum value of the item-to-item similarities between the target facility $P_C$ and the other facilities is "9", "9" is adopted for $S$ of Equation (1). The maximum value of the item-to-item similarity between the target facility and another facility indicates how much the target facility is similar to the other facility. In a case where the maximum value of the item-to-item similarity between the target facility and another facility is a small value within the range of more than 0 and 10 or less, it is indicated that there is no object having high similarity, that is, there is a possibility that the facility is a special facility compared to other facilities, as compared with a case where the maximum value is a large value. On the other hand, in a case where the maximum value of the item-to-item similarity between the target facility and another facility is a large value within the range of more than 0 and 10 or less, it is indicated that there is another facility similar to the target facility, that is, there is a possibility that the target facility is not a special facility, as compared with a case where the maximum value is a small value.

In Equation (1), the larger the item-to-item similarity $S$ is, the lower the unexpectedness evaluation value $V_2$ is. In the present embodiment, the values of the interest evaluation value $V_1$ and the unexpectedness evaluation value $V_2$ are positive numbers up to 5, and the range of the value of the item-to-item similarity $S$ is a positive number up to 10, which is twice the ranges of the values of the interest evaluation value $V_1$ and the unexpectedness evaluation value $V_2$. Therefore, in order to adjust the range of values, Equation (1) is transformed to $V_2 = \{(V_1 \times 2) \times K_1 - S \times K_2\} \div 2$ for calculation. Specifically, for example, as the unexpectedness evaluation value $V_2$ of the facility $P_C$ of the user $U_1$, $\{(5 \times 2) \times 0.8 - 9 \times 0.2\} \div 2 = 3.1$ is obtained. Similarly, as the unexpectedness evaluation value $V_2$ of the facility $P_E$ of the user $U_1$, $\{(2 \times 2) \times 0.8 - 8 \times 0.2\} = 3.2$ is obtained. Therefore, for the facility $P_C$ and the facility $P_E$ for the user $U_1$, the interest evaluation value $V_1$ is a larger value for the facility $P_C$, but the unexpectedness evaluation value $V_2$ is a larger value for the facility $P_E$. The control unit 20 considers that there is a possibility that a facility having a large unexpectedness evaluation value $V_2$ is a facility having a high unexpectedness for the user $U_1$.

Note that, for $S$ of Equation (1), an average value of the item-to-item similarities between the target facility and all other facilities for the target user may be adopted, or a minimum value or a mode value may be adopted. Alternatively, an item-to-item similarity between the target facility and another specific facility may be adopted as $S$. The other specific facility may be, for example, a specific facility in which the user has stayed in the past. In this way, it is possible to easily lower the unexpectedness evaluation value $V_2$ of a facility having a high similarity with another specific facility.

As described above, the control unit 20 calculates the unexpectedness evaluation value $V_2$ for each facility for each user. The unexpectedness evaluation value $V_2$ is calculated by adopting the item-to-item similarity $S$ acquired by a method selected from among various methods as described above for each facility for each user.

By the function of the recommendation module 21e, the control unit 20 recommends an item selected on the basis of the calculated unexpectedness evaluation

value $V_2$ to the target user. In the present embodiment, for example, as illustrated in Fig. 4A, the control unit 20 selects facilities that do not initially have a value of the interest evaluation value $V_1$ for the target user. Furthermore, from among the facilities, the control unit 20 selects facilities in the target region in the recommendation request. Then, the control unit 20 sorts the selected facilities in descending order of the unexpectedness evaluation value $V_2$, and returns information of a predetermined number of facilities to the navigation system 50 in order from the facility having the largest unexpectedness evaluation value $V_2$. The navigation system 50 recommends the facility to the target user by displaying the information of the facility that has been returned.

As described above, according to the present embodiment, the order of the facilities arranged in the order in which the interest of the target user is estimated to be strong is changed on the basis of the item-to-item similarities. The interest evaluation value $V_1$ of the target facility is updated so as to decrease as the item-to-item similarity between the target facility and another facility increases, whereby the unexpectedness evaluation value $V_2$ is calculated. In other words, it is possible to make it easy to increase the rank of a facility that is low in the ranking of the interest evaluation value $V_1$ and is difficult to be recommended to the target user, with the unexpectedness evaluation value $V_2$. Therefore, according to the present embodiment, it is possible to increase the possibility that a facility that is interesting to the target user but is novel with unexpectedness can be recommended to the target user.

(2) Recommendation processing:

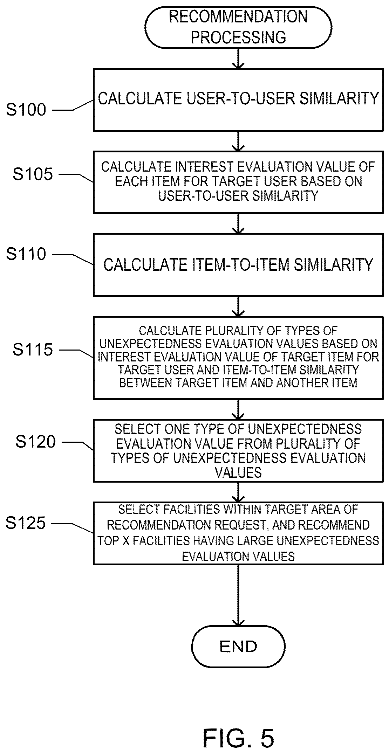

Next, the recommendation processing executed by the control unit 20 will be described with reference to Fig. 5. The recommendation processing is executed when the control unit 20 receives a recommendation request for the target user from the navigation system 50 via the communication unit 41. When the recommendation processing is started, the control unit 20 calculates a user-to-user similarity by the function of the multifaceted similarity calculation module 21c (step S100). That is, the control unit 20 calculates the distance of the interest vector of each user on the basis of the user data 30a, and calculates the user-to-user similarity, which is the similarity between the users, according to the distance.

Subsequently, by the function of the unexpectedness evaluation value calculation module 21d, the control unit 20 calculates an interest evaluation value of each item for the target user on the basis of the user-to-user similarity (step S105). That is, the control unit 20 calculates the interest evaluation value $V_1$ of the facility in which the target user has caused certain action in the past. The certain action may be, for example, an actual visit, rating, review, or the like. For example, if the rating values are the same, the interest evaluation value $V_1$ is

calculated to be larger for a facility having a large number of visits by the target user than for a facility having a small number of visits by the target user. For example, if the number of visits is the same, the interest evaluation value $V_1$ is calculated to be larger for a facility having a large rating value by the target user than for a facility having a small rating value by the target user. Furthermore, for a facility in which the target user has not performed any action, the interest evaluation value $V_1$ of another user having a high user-to-user similarity with the target user for the facility is diverted as the interest evaluation value $V_1$ of the target user.

Subsequently, by the function of the multifaceted similarity calculation module 21c, the control unit 20 calculates an item-to-item similarity (step S110). That is, the control unit 20 calculates the distance of the feature vector of each item, and calculates the item-to-item similarity, which is the similarity between the facilities, according to the distance.

Subsequently, by the function of the unexpectedness evaluation value calculation module 21d, the control unit 20 calculates a plurality of types of unexpectedness evaluation values on the basis of the interest evaluation value of the target item for the target user and the item-to-item similarity between the target item and another item (step S115). That is, the control unit 20 calculates the unexpectedness evaluation value $V_2$ by the above-described Equation (1) for each facility for the target user. As the item-to-item similarity S to be used in Equation (1), values acquired by various methods as described above are adopted, and a plurality of types of the unexpectedness evaluation values $V_2$ are calculated. Note that, of course, a value acquired by a method selected from among a plurality of methods may be adopted as the item-to-item similarity S to calculate one type of the unexpectedness evaluation value $V_2$.

Subsequently, by the function of the unexpectedness evaluation value calculation module 21d, the control unit 20 calculates one type of unexpectedness evaluation value from the plurality of types of unexpectedness evaluation values calculated in step S115 (step S120). That is, in a case where a plurality of types of the unexpectedness evaluation values $V_2$ are calculated in step S115, the control unit 20 selects, from among the plurality of types of the unexpectedness evaluation values $V_2$, a value satisfying a predetermined condition, for example, the highest unexpectedness evaluation value $V_2$. In a case where one type of unexpectedness evaluation value $V_2$ is calculated by a preselected method in step S115, step S120 is skipped.

Subsequently, by the function of the recommendation module 21e, the control unit 20 selects facilities within the target area of the recommendation request, and recommends the top X facilities having large unexpectedness evaluation values to the target user (step S125). That is, in the present embodiment, as illustrated in Fig. 4A, facilities for which the value of the interest evaluation value $V_1$ is not initially recorded are selected for the target user. Furthermore, from among the facilities, the control unit 20 selects facilities in the target region in the recommendation request. Then, the control unit 20 sorts the selected facilities in descending order of the unexpectedness evaluation value $V_2$, and returns information of a predetermined number of facilities to the navigation system 50 in order from the facility having the largest unexpectedness evaluation value $V_2$. The navigation system 50 recommends the facility to the target user by displaying the information of the facility that has been returned.

(3) Other embodiments:

The above embodiment is an example for carrying out the present disclosure, and various other embodiments can be adopted. For example, the recommendation system 10 may include a plurality of devices (a server, a client, etc.). For example, the multifaceted similarity calculation module 21c, the unexpectedness evaluation value calculation module 21d, and the recommendation module 21e constituting the recommendation system may exist in a client device. Some configurations of the above-described embodiment may be omitted, or the order of processing may be changed or omitted.

An item to be recommended by the recommendation system is not limited to a facility that can be a destination for the navigation function. The item may be event information. Furthermore, the present disclosure can also be applied to a case where recommendations of products, services, or functions are presented in a shopping site, another site, a smartphone app, or the like, for example, other than a navigation system.

In the above embodiment, the trigger for executing the recommendation processing in Fig. 5 is reception of the recommendation request from the navigation system 50, but S100 to S120 of the recommendation processing may be executed in advance, for example, periodically, and the processing of S120 to S125 may be configured to be executed in response to the recommendation request.

The recommendation module only needs to be able to recommend an item selected on the basis of the unexpectedness evaluation value to the target user. In the above-described embodiment, an item for which the interest evaluation value $V_1$ has not been originally recorded for the target user is extracted, ranking is performed with the unexpectedness evaluation value $V_2$ of the item, and a predetermined number of top items are recommended to the target user. However, a configuration may be adopted in which ranking is performed with the unexpectedness evaluation values $V_2$ of all items including an item for which the interest evaluation value $V_1$ has not been originally recorded for the target user, and a predetermined number of top items are recommended to the target user. In addition, a predetermined number of top items may be recommended at a time or may be recommended one by one after a lapse of time.

In the user data acquisition module, the method of calculating the interest vector of a user described in the above embodiment is an example, and various other methods may be adopted as long as the information indicating the interest of a user can be acquired. For example, the interest vector of the user may be acquired from a favorite genre or a favorite facility registered by the user, the interest vector may be acquired from a search condition frequently used by the user, or the interest vector may be acquired from a browsing history of detailed information. Furthermore, it may be configured to analyze image data captured by the user included in the review data for the item and extract a character or an object included in the image data as at least one component of the interest vector of the user. Furthermore, the item data acquisition module may also be configured to analyze image data captured by the user included in the review data for the item and extract a character or an object included in the image data as at least one component of the feature vector of the item.

Furthermore, in the multifaceted similarity calculation module, various methods may be adopted as a method of calculating the similarity between the users. For example, each user may be grouped in advance by the interest vector, and the similarity with another group may be defined for each group. In this case, if the group to which the target user belongs is the same as the group to which another user to be compared belongs, the similarity is maximized, and if the groups are different, the user-to-user similarity may be set by the similarity between the two groups.

The unexpectedness evaluation value calculation module is only required to be able to adjust the evaluation value such that the target item is more likely to be a recommendation target in a case where the item-to-item similarity between the target item and another item is low than in a case where the similarity between the items is high. The method is not limited to Equation (1).

Furthermore, in the above-described embodiment, the multifaceted similarity calculation module is configured to calculate the item-to-item similarity on the basis of the evaluation of each item by a random user, but may be configured to calculate the item-to-item similarity on the basis of information regarding each item other than evaluation by the user, for example, an attribute of each item. As illustrated in "ATTRIBUTE OF FACILITY" in Fig. 2B, the attribute of each item may be assumed to be, for example, a genre, a keyword, a key phrase, or the like of the item predetermined by an operator of the recommendation system or a provider who provides the item to the user. One of the two types of item-to-item similarities described above is referred to as first item-to-item similarity, and the other is referred to as second item-to-item similarity. In the example to be described next, the item-to-item similarity calculated on the basis of the evaluation of each item by a random user will be described as the first item-to-item similarity, and the item-to-item similarity calculated on the basis of the attribute of the item will be described as the second item-to-item similarity, although the first item-to-item similarity and the second item-to-item similarity may correspond to either of the cases.

In the above embodiment, in the processing of calculating the interest evaluation value of each item for the target user (S105), the interest evaluation value of an item that does not have a value is acquired on the basis of the user-to-user similarity. However, in another embodiment, a configuration of calculating the interest evaluation value indicating the level of interest of the target user in each item on the basis of the user-to-user similarity and the first item-to-item similarity may be adopted.

Specifically, for example, in the example of Fig. 4A, the description will be continued assuming that the target user is the user $U_1$. The user $U_1$ does not have the interest evaluation value $V_1$ of the facility $P_C$. With reference to Figs. 3A and 4A, the control unit 20 specifies the user $U_4$ as another user having a high similarity with the user $U_1$ among the other users having the evaluation value of the facility $P_C$. The control unit 20 acquires "5", which is the interest evaluation value $V_1$ of the facility $P_C$ of the user $U_4$, with reference to Fig. 4A, and sets the value as one element $V_{11}$ for calculating the interest evaluation value $V_1$ of the facility $P_C$ of the target user $U_1$. Furthermore, the control unit 20 acquires another facility most similar to the facility $P_C$ by referring to the first item-to-item similarity (according to the user evaluation). In the example of Fig. 3B, the facility most similar to the facility $P_C$ is the facility $P_A$ having the similarity of "9". In the example of Fig. 4A, the interest evaluation value $V_1$ of the facility $P_A$ for the user $U_4$ is "5". In a case where the interest evaluation value "5" of the similar user $U_4$ for the facility $P_A$ having the highest item-to-item similarity with the facility $P_C$ according to the user evaluation is diverted as the interest evaluation value $V_1$ of the facility $P_C$ of the target user $U_1$, the control unit 20 corrects the evaluation value "5" of the facility $P_A$ similar to the facility $P_C$ of the target user $U_1$ using the fact that a magnitude of the item-to-item similarity is "9", that is, within the range of more than 0 and 10 or less. That is, by $5 \times (9/10)$, the control unit 20 acquires "4.5" as another element $V_{12}$ for calculating the interest evaluation value $V_1$ of the facility $P_C$ of the target user $U_1$. The control unit 20 calculates an average value of the elements $V_{11}$ and $V_{12}$ for calculating the interest evaluation value of the facility $P_C$ of the target user $U_1$, and sets the average value as the interest evaluation value $V_1$ of the facility $P_C$ of the target user $U_1$. The interest evaluation value is similarly calculated for the facility $P_E$ for which the target user $U_1$ does not have the interest evaluation value. That is, the control unit 20 specifies the user $U_5$ as the user most similar to the target user $U_1$ among the other users having the evaluation value of the facility $P_E$ with reference to Figs. 3A and 4A, and acquires the interest evaluation value "2" of the facility $P_E$ of the user $U_5$ as $V_{11}$. Furthermore, referring to Fig. 3B, the control unit 20 corrects $(2 \times (8/10))$ the evaluation value "2" of the facility $P_B$ and the facility $P_F$, each having the largest item-to-item similarity with the facility $P_E$, of the target user $U_1$ by the magnitude of the item-to-item similarity (8 within the range of more than 0 and 10 or less), and acquires "1.6" as $V_{12}$. The control unit 20 acquires "1.8", which is an average value of $V_{11}$ and $V_{12}$, as the interest evaluation value $V_1$ of the facility $P_E$ of the user $U_1$.

In this way, after acquiring the interest evaluation value $V_1$ of each facility of the target user, the control unit 20 calculates the unexpectedness evaluation value on the basis of the interest evaluation value and the second item-to-item similarity. That is, the control unit 20 calculates the unexpectedness evaluation value by updating the interest evaluation value of the target item so as to decrease as the second item-to-item similarity between the target item and another item increases. Specifically, the unexpectedness evaluation value $V_2$ of each item of the target user is calculated using the second item-to-item similarity for S of Equation (1). In this example, the second item-to-item similarity is the similarity calculated between the facilities on the basis of the attributes of the facilities. Although not illustrated, the item-to-item similarities based on the attributes of the facilities may each have different values from the item-to-item similarities based on the user evaluation illustrated in Fig. 3B. Since the unexpectedness evaluation value is calculated from the interest evaluation value using the first item-to-item similarity, the second item-to-item similarity, and the user-to-user similarity, which are calculated with different multifaceted scales, it is possible to easily extract an item with unexpectedness for the target user.

Note that the unexpectedness evaluation value calculation module may be configured to calculate an interest evaluation value indicating the level of interest of the target user in each item on the basis of the user-to-user similarity, and calculate the unexpectedness evaluation value on the basis of the interest evaluation value and the item-to-item similarity calculated on the basis of the attributes of the items. That is, it may be configured that the unexpectedness evaluation value is calculated by updating the interest evaluation value of the target item so as to decrease as the item-to-item similarity between the target item and another item based on the attribute increases.

Furthermore, the method of the present disclosure can also be applied as a program or a method. In addition, the system, the program, and the method as described above may be implemented as a single device or may be implemented by using a component shared with each unit included in a vehicle, and include various aspects. In addition, these can be changed as appropriate such that a part is software and a part is hardware. Furthermore, the invention is also implemented as a recording medium of a program for controlling a system. Of course, the recording medium of the program may be a magnetic recording medium or a semiconductor memory, and can be considered in exactly the same manner for any recording medium to be developed in the future.

(Summary of the present embodiment)

The present embodiment includes at least the following configuration. Note that the components and the like corresponding to the above-described embodiments are shown in parentheses, but the present invention is not limited thereto. A recommendation system (10) includes: a user data acquisition module (21a) that acquires, for each of a plurality of users, user data (30a) indicating an interest of a user; an item data acquisition module (21b) that acquires item data (30b) indicating a feature of each item; a multifaceted similarity calculation module (21c) that calculates a user-to-user similarity indicating a similarity between a target user and another user on the basis of the user data (30a) and calculates an item-to-item similarity indicating a similarity between items on the basis of the item data (30b); an unexpectedness evaluation value calculation module (21d) that calculates an unexpectedness evaluation value indicating unexpectedness of each item for the target user on the basis of the user-to-user similarity and the item-to-item similarity; and a recommendation module (21e) that recommends, to the target user, an item selected on the basis of the unexpectedness evaluation value that has been calculated.

With this configuration, it is possible to select and recommend an item with unexpectedness for the target user.

Furthermore, in the recommendation system (10), it may be configured that the item-to-item similarity is calculated on the basis of the evaluation of each item by a random user. In that case, the unexpectedness evaluation value calculation module (21d) may be configured to calculate an interest evaluation value indicating the level of interest of the target user in each item on the basis of the user-to-user similarity, and calculate the unexpectedness evaluation value on the basis of the interest evaluation value and the item-to-item similarity.

With this configuration, since the interest evaluation value of each item for the target user can be calculated on the basis of the user-to-user similarity, for example, for an item for which the interest evaluation value is not recorded for the target user, the interest evaluation value estimated on the basis of the user-to-user similarity can be set to the target user.

Furthermore, in the recommendation system (10), the unexpectedness evaluation value calculation module (21d) may be configured to calculate the unexpectedness evaluation value by updating the interest evaluation value of the target item so as to decrease as the item-to-item similarity between the target item and another item increases.

With this configuration, the unexpectedness evaluation value of an item that is less likely to be special than other items can be easily set to a low value.

Furthermore, in the recommendation system (10), it may be configured that the item-to-item similarity includes a first item-to-item similarity and a second item-to-item similarity, the first item-to-item similarity is any one of a similarity calculated on the basis of the evaluation of each item by a random user and a similarity calculated on the basis of an attribute of each item, and the second item-to-item similarity is the other. In that case, the unexpectedness evaluation value calculation module (21d) may be configured to calculate an interest evaluation value indicating the level of interest of the target user in each item on the basis of the user-to-user similarity and the first item-to-item similarity, and calculate the unexpectedness evaluation value on the basis of the interest evaluation value and the second item-to-item similarity.

With this configuration, the unexpectedness evaluation value can be calculated using the two types of item-to-item similarities acquired with different scales and the user-to-user similarity.

Furthermore, in the recommendation system (10), the unexpectedness evaluation value calculation module (21d) may be configured to calculate the unexpectedness evaluation value by updating the interest evaluation value of the target item so as to decrease as the second item-to-item similarity between the target item and another item increases.

With this configuration, since the unexpectedness evaluation value is calculated from the interest evaluation value using the first item-to-item similarity, the second item-to-item similarity, and the user-to-user similarity, which are calculated with different multifaceted scales, it is possible to easily extract an item with unexpectedness for the target user.

REFERENCE SIGNS LIST

10      Recommendation system
20      Control unit
21      Recommendation program
21a     User data acquisition module
21b     Item data acquisition module
21c     Multifaceted similarity calculation module
21d     Unexpectedness evaluation value calculation module
21e     Recommendation module
30      Recording medium
30a     User data
30b     Item data
30c     Review data
41      Communication unit
50      Navigation system
50a     Communication unit
50b     GNSS reception unit
50c     Control unit
50d     User I/F unit

**Claims**

1.  A recommendation system comprising:

    a user data acquisition module that acquires, for each of a plurality of users, user data indicating an interest of a user;
    an item data acquisition module that acquires item data indicating a feature of each item;
    a multifaceted similarity calculation module that calculates a user-to-user similarity indicating a similarity between a target user and another user on a basis of the user data and calculates an item-to-item similarity indicating a similarity between items on a basis of the item data;
    an unexpectedness evaluation value calculation module that calculates an unexpectedness evaluation value indicating unexpectedness of each item for the target user on a basis of the user-to-user similarity and the item-to-item similarity; and
    a recommendation module that recommends, to the target user, an item selected on a basis of the unexpectedness evaluation value that has been calculated.

2.  The recommendation system according to claim 1, wherein

    the item-to-item similarity is calculated on a basis of an evaluation of each item by a random user, and
    the unexpectedness evaluation value calculation module

        calculates an interest evaluation value indicating a level of interest of the target user in each item on a basis of the user-to-user similarity, and
        calculates the unexpectedness evaluation value on a basis of the interest evaluation value and the item-to-item similarity.

3.  The recommendation system according to claim 2, wherein
    the unexpectedness evaluation value calculation module calculates the unexpectedness evaluation value by updating the interest evaluation value of the target item so as to decrease as the item-to-item similarity between the target item and another item increases.

4.  The recommendation system according to claim 1, wherein

    the item-to-item similarity includes a first item-to-item similarity and a second item-to-item similarity, and the first item-to-item similarity is one of a similarity calculated on a basis of an evaluation of each item by a random user and a similarity calculated on a basis of an attribute of each item, and the second item-to-item similarity is the other; and
the unexpectedness evaluation value calculation module

calculates an interest evaluation value indicating a level of interest of the target user in each item on a basis of the user-to-user similarity and the first item-to-item similarity; and
calculates the unexpectedness evaluation value on a basis of the interest evaluation value and the second item-to-item similarity.

5. The recommendation system according to claim 4, wherein
the unexpectedness evaluation value calculation module calculates the unexpectedness evaluation value by updating the interest evaluation value of the target item so as to decrease as the second item-to-item similarity between the target item and another item increases.

FIG. 1

**FIG. 2A**

| USER ID / FACILITY ID | USER U₁ | USER U₂ | USER U₃ | USER U₄ | | EXTRACTED KEYWORDS |
|---|---|---|---|---|---|---|
| FACILITY Pₐ | FOR PASSING TIME (5) | WITH FAMILY (3) | — | RESERVATION POSSIBLE (5) | ⇨ | RESERVATION, TIME ... |
| FACILITY P_B | QUIET (3) | WINE IS ... (3) | PARKING LOT IS ... (5) | RELAX AND ... (1) | ⇨ | QUIET, WINE ... |
| FACILITY P_C | — | — | DAILY LUNCH SPECIAL (3) | SET MEAL ... (5) | ⇨ | LUNCH, SET MEAL ... |
| FACILITY P_D | — | WITH WINE ... (3) | DESSERT BUFFET IS ... (2) | MANY TYPES OF DESSERTS (4) | ⇨ | DESSERT, WINE ... |

| | ⇩ | ⇩ | ⇩ | ⇩ |
|---|---|---|---|---|
| EXTRACTED KEYWORDS | TIME, QUIET, ... | FAMILY, WINE, ... | PARKING LOT, LUNCH ... | RESERVATION, RELAX, ... |

**FIG. 2B**

| FACILITY ID | NAME | POSITION INFORMATION | ADDRESS | TELEPHONE NUMBER | ATTRIBUTE OF FACILITY | | KEYWORDS EXTRACTED FROM TEXT DATA OF REVIEW DATA |
|---|---|---|---|---|---|---|---|
| | | | | | FACILITY GENRE | FACILITY KEYWORD | |
| FACILITY Pₐ | *** | *** | *** | *** | FAMILY-FRIENDLY RESTAURANT | NEAR STATION, ... | RESERVATION, TIME ... |

**FIG. 2C**

| USER ID | KEYWORDS EXTRACTED FROM TEXT DATA OF REVIEW DATA | FACILITY STAY HISTORY |
|---|---|---|
| USER U₁ | TIME, QUIET, ... | FACILITY Pₐ (3 TIMES), FACILITY P_B (2 TIMES), ... |

EP 4 672 033 A1

13

| USER-TO-USER SIMILARITY | USER $U_1$ | USER $U_2$ | USER $U_3$ | USER $U_4$ | USER $U_5$ | USER $U_6$ |
|---|---|---|---|---|---|---|
| USER $U_1$ | | 8 | 3 | 10 | 9 | 2 |
| USER $U_2$ | 8 | | 1 | 5 | 4 | 5 |
| USER $U_3$ | 3 | 1 | | 3 | 7 | 2 |
| USER $U_4$ | 10 | 5 | 3 | | 6 | 1 |
| USER $U_5$ | 9 | 4 | 7 | 6 | | 1 |
| USER $U_6$ | 2 | 5 | 2 | 1 | 1 | |

## FIG. 3A

| ITEM-TO-ITEM SIMILARITY (USER EVALUATION) | FACILITY $P_A$ | FACILITY $P_B$ | FACILITY $P_C$ | FACILITY $P_D$ | FACILITY $P_E$ | FACILITY $P_F$ |
|---|---|---|---|---|---|---|
| FACILITY $P_A$ | | 3 | 9 | 7 | 4 | 4 |
| FACILITY $P_B$ | 3 | | 2 | 3 | 8 | 10 |
| FACILITY $P_C$ | 9 | 2 | | 8 | 1 | 4 |
| FACILITY $P_D$ | 7 | 3 | 8 | | 6 | 5 |
| FACILITY $P_E$ | 4 | 8 | 1 | 6 | | 8 |
| FACILITY $P_F$ | 4 | 10 | 4 | 5 | 8 | |

## FIG. 3B

| INTEREST EVALUATION VALUE $V_1$ | FACILITY $P_A$ | FACILITY $P_B$ | FACILITY $P_C$ | FACILITY $P_D$ | FACILITY $P_E$ | FACILITY $P_F$ |
|---|---|---|---|---|---|---|
| USER $U_1$ | 5 | 2 | | 4 | | 2 |
| USER $U_2$ | 4 | 3 | | 2 | 1 | |
| USER $U_3$ | | 5 | 2 | 1 | | |
| USER $U_4$ | 5 | 1 | 5 | 4 | | |
| USER $U_5$ | 4 | 1 | | 3 | 2 | |
| USER $U_6$ | | | 5 | 4 | 1 | 2 |
| | | | | | | |

## FIG. 4A

| INTEREST EVALUATION VALUE $V_1$ | FACILITY $P_A$ | FACILITY $P_B$ | FACILITY $P_C$ | FACILITY $P_D$ | FACILITY $P_E$ | FACILITY $P_F$ |
|---|---|---|---|---|---|---|
| USER $U_1$ (TARGET USER) | 5 | 2 | **<u>5</u>** | 4 | **<u>2</u>** | 2 |
| | | | | | | |

## FIG. 4B

RECOMMENDATION
PROCESSING

S100 — CALCULATE USER-TO-USER SIMILARITY

S105 — CALCULATE INTEREST EVALUATION VALUE OF
EACH ITEM FOR TARGET USER BASED ON
USER-TO-USER SIMILARITY

S110 — CALCULATE ITEM-TO-ITEM SIMILARITY

S115 — CALCULATE PLURALITY OF TYPES OF
UNEXPECTEDNESS EVALUATION VALUES BASED ON
INTEREST EVALUATION VALUE OF TARGET ITEM FOR
TARGET USER AND ITEM-TO-ITEM SIMILARITY
BETWEEN TARGET ITEM AND ANOTHER ITEM

S120 — SELECT ONE TYPE OF UNEXPECTEDNESS
EVALUATION VALUE FROM PLURALITY OF
TYPES OF UNEXPECTEDNESS EVALUATION
VALUES

S125 — SELECT FACILITIES WITHIN TARGET AREA OF
RECOMMENDATION REQUEST, AND RECOMMEND
TOP X FACILITIES HAVING LARGE UNEXPECTEDNESS
EVALUATION VALUES

END

FIG. 5

## INTERNATIONAL SEARCH REPORT

| International application No. |
|---|
| **PCT/JP2024/002362** |

**A.    CLASSIFICATION OF SUBJECT MATTER**

*G06F 16/9035*(2019.01)i
FI:    G06F16/9035

According to International Patent Classification (IPC) or to both national classification and IPC

**B.    FIELDS SEARCHED**

Minimum documentation searched (classification system followed by classification symbols)

G06F16/00-16/958

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2008-204235 A (HITACHI, LTD.) 04 September 2008 (2008-09-04) paragraphs [0007], [0018]-[0037], fig. 1 | 1 |
| A |  | 2-5 |
| A | JP 2005-202540 A (NEO JSK KK) 28 July 2005 (2005-07-28) paragraphs [0012], [0022]-[0050] | 1-5 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **29 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/002362**

| Patent document cited in search report | | | Publication date (day/month/year) | Patent family member(s) | Publication date (day/month/year) |
|---|---|---|---|---|---|
| JP | 2008-204235 | A | 04 September 2008 | US 2008/0201287 A1 paragraphs [0008], [0032]-[0058], fig. 1 | |
| JP | 2005-202540 | A | 28 July 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009252177 A